# EUROPÄISCHE PATENTSCHRIFT

(11) **EP 2 116 803 B1**
(45) Veröffentlichungstag und Bekanntmachung des Hinweises auf die Patenterteilung: **16.03.2016**
(21) Anmeldenummer: 09006102.9
(22) Anmeldetag: 05.05.2009
(51) Int. Cl.: F28D 7/10, F28F 1/00, F28F 9/04, B21C 23/10, B23D 31/00, B21C 23/08, F28F 9/02, F25B 40/00

(54) **Koaxialprofil und Verfahren zur Herstellung eines solchen Koaxialprofils**
Coaxial profile and method for manufacturing the same
Profilé coaxial et procédé de fabrication d'un tel profilé coaxial

(30) Priorität: 09.05.2008 DE 102008022933; 09.05.2008 DE 202008006379 U
(43) Veröffentlichungstag der Anmeldung: 11.11.2009
(73) Patentinhaber: Erbslöh Aluminium GmbH, 42553 Velbert (DE)
(72) Erfinder: Sucke, Norbert William, 47269 Duisburg (DE); Breindl, Reiner, 45527 Hattingen (DE); Boyraz, Ismail, 44809 Bochum (DE)
(74) Vertreter: Buse, Mentzel, Ludewig Patentanwaltskanzlei

(56) Entgegenhaltungen:
- DE-T2- 60 102 027
- US-A- 3 568 488
- US-A- 5 133 492
- US-A- 5 407 116
- US-A- 6 098 704

## Beschreibung

Die Erfindung betrifft ein Verfahren zur Herstellung eines Koaxialprofils, ein Koaxialprofil und die Verwendung eines solchen Koaxialprofils für einen inneren Wärmetauscher einer Klimaanlage, wie sie aus der US 6 098 704 A bekannt sind.

Eine Klimaanlage besitzt im Allgemeinen einen Verdichter, einen Verflüssiger und eine Expansionsvorrichtung sowie einen Verdampfer. Diese Bestandteile sind üblicherweise nacheinander angeordnet und über fluidleitende Rohre zu einem Kreislauf miteinander verbunden. Für einen reibungslosen Betrieb einer solchen Klimaanlage hat sich ein sogenannter innerer Wärmetauscher bewährt, der zum einen das Hochdruckkältemittel, wie z.B. Kohlendioxid bzw. R744, das zur Expansionsvorrichtung geleitet wird, abkühlt und zum anderen das aus dem Verdampfer herauskommende entspannte Niederdruckkältemittel erwärmt. Die bisherigen Kältemittel, beispielsweise R134a, sollen in Zukunft wegen ihrer FCKW-Bestandteile durch weniger umweltschädliche Kältemittel ersetzt werden. Ein alternatives Fluid für einen solchen Kältemittelkreislauf ist beispielsweise Kohlendioxid. Ein solches Fluid stellt jedoch höhere Anforderungen an eine Klimaanlage, da ein höherer Betriebsdruck erforderlich ist und damit die einzelnen Bestandteile der Anlage auf höhere Berstdrücke ausgelegt werden müssen.

Bekannt ist es, für den inneren Wärmetauscher Koaxialrohre zu verwenden, d.h. Mehrkammerprofile mit einem Zentralkanal und mehreren, um den Zentralkanal herum gruppierten Außenkanälen. Zwischen dem Zentralkanal und den Außenkanälen findet ein Wärmeaustausch statt, da die Kanäle von unterschiedlich warmen Medien durchströmt werden. Darüber hinaus bestehen erhebliche Druckunterschiede zwischen dem Zentralkanal und den Außenkanälen. Ein Koaxialrohr für einen inneren Wärmetauscher wird daher vorzugsweise als symmetrisches Profil verwendet, wo weder Druckänderungen noch Temperaturänderungen zu nennenswerten Verformungen führen. Das Einleiten und Ausleiten der Fluide in den Zentralkanal bzw. in die Außenkanäle erfolgt über entsprechende Anschlussstücke, die an beiden Enden des Koaxialrohres angelötet werden. Um Druckverluste an den Anschlussstellen zu vermeiden, sind passgenaue Verbindungen zwischen den Anschlussstücken und den Enden der Koaxialrohre erwünscht. Im amerikanischen Patent US 6,098,704 A werden die Enden des Koaxialrohres zur Verbindung mit den Anschlussstücken entsprechend bearbeitet und zwar in der Weise, dass im Bereich der Enden der Koaxialrohre die Außenkanäle der Koaxialrohre entfernt werden und nur das innere Rohr, welches den Zentralkanal bildet, verbleibt. Auf diese Weise wird ein separater Zu- bzw. Abfluss der Fluide über separate Anschlussstücke möglich. Bei einer Klimaanlage gemäß DE 100 53 000 A1 werden Anschlussstücke verwendet, die einen Zufluss in den Zentralkanal einerseits und einen Zufluss in die Außenkanäle andererseits sicherstellen. Diese Anschlussstücke werden unmittelbar an den Enden der Koaxialrohre angeordnet. Problematisch ist bei beiden Vorrichtungen, dass Verunreinigungen, die bei der Herstellung der Koaxialrohre in das Innere der Kanäle gelangen können, bei der Verbindungsbildung das Lötergebnis stören und bei Verwendung als innerer Wärmetauscher zu Druckverlusten bzw. auch zu Verstopfungen in den Anschlussstücken führen können. Bei solchen Verunreinigungen handelt es sich beispielsweise um Fette und Öle, die zur Schmierung eines Trennwerkzeuges auf das Koaxialrohr aufgetragen werden und nach dem Trennschnitt auf dem Rohr oder in den Innenkanälen verbleiben. Während eines Trennschnittes entstehen des Weiteren Späne, die von dem Fett am Koaxialrohr festgehalten werden bzw. auch ohne Verwendung eines Schmierfettes in die Kanäle des Koaxialrohres hineinwandern. Solche Verunreinigungen sind aus vorgenannten Gründen unerwünscht und müssen daher, bevor die Koaxialrohre mit den Anschlussstücken zu einem Wärmetauscher verbunden werden, in zusätzlichen Reinigungsschritten zum Teil aufwendig entfernt werden. Hierbei ist eine vollständige, rückstandslose Entfernung der Verunreinigungen prozesssicher nicht zu gewährleisten. Aufgabe der vorliegenden Erfindung ist es, ein verbessertes Koaxialrohr zur Verfügung zu stellen, das auf einfachere Weise herstellbar ist und den Anforderungen beim Einsatz in einem inneren Wärmetauscher gerecht wird. Die Aufgabe wird mit einem Koaxialprofil mit den Merkmalen des Anspruches 8 erfüllt. Ein solches Koaxialprofil eignet sich für die Verwendung in einem inneren Wärmetauscher und kann erfindungsgemäß nach einem Verfahren gemäß Anspruch 1 hergestellt werden.

Das erfindungsgemäße Koaxialrohr eignet sich für die getrennte Durchleitung zweier Medien mit unterschiedlichen Drucken. Das Koaxialprofil besteht vorzugsweise aus Aluminium oder einer Aluminiumlegierung. Es umfasst ein Innenrohr, welches einen Zentralkanal für die Durchleitung eines Mediums bildet, insbesondere für die Durchleitung des Hochdruckmediums. Das Koaxialprofil umfasst des weiteren ein das Innenrohr umgebendes Außenrohr, wobei im Zwischenraum zwischen dem Außenrohr und dem Innenrohr mehrere die äußere Mantelfläche des Innenrohres und die innere Mantelfläche des Außenrohres verbindende, sich radial erstreckende Stege angeordnet sind, so dass sich mehrere, um den Zentralkanal angeordnete Außenkanäle ergeben. Durch diese Außenkanäle fließt das zweite Medium, vorzugsweise das gasförmige Medium, das einen niederen Druck aufweist.

Das erfindungsgemäße Koaxialprofil besitzt neuartig ausgestaltete Enden. Diese gratarmen bis gratfreien Enden zeigen eine im Wesentlichen konvex nach außen gewölbte Stirnfläche. Nicht gewölbt sind jedoch die Stirnflächen des Außenrohres, die über einen wesentlichen Bereich senkrecht zur Längsrichtung der Koaxialprofile verlaufen und in diesem Bereich als glatte Stirnflächen ausgebildet sind. Bevorzugt sind die Stirnflächen ausgehend von der äußeren Mantelfläche der Außenrohre über 60 bis 90 % der Dicke des Außenrohres glatt ausgebildet, bevorzugt über mindestens 90% der Dicke des Außenrohres, besonders bevorzugt über 100% der Dicke des Außenrohres. Diese glatt ausgebildeten Stirnflächen des Außenrohres dienen der dichten Verbindung mit den Anschlussstücken und ermöglichen ein problemloses Verlöten.

Der nach außen gewölbte Bereich der Stirnfläche des Koaxialprofils kommt dadurch zustande, dass das Koaxialprofil nicht durch einen Trennschnitt von einem Strang abgetrennt wird, sondern von einem solchen Strang abgerissen wird. Beidseitig einer vorgesehenen Trennstelle wird der Strang gehalten und dann gerissen. Bei diesem Zerreißprozess wird das Koaxialprofil in Längsrichtung, von der Trennstelle weggezogen. Zur Unterstützung des Reißprozesses und zur Herabsetzung der Zerreißkraft muss der Strang vor dem Zerreißen an der vorgesehenen Trennstelle teilweise, in ganz verschiedenen Ritztiefen, eingeritzt werden. Während des Zerreißens wandert der Riss von außen nach innen durch das Koaxialrohr. Dies bedeutet, dass die mittleren Bereiche des Koaxialprofils zuletzt von dem Strang entfernt werden und damit am längsten gezogen werden. Also wird das Innenrohr länger gezogen als das Außenrohr und demzufolge überragen die Enden des Innenrohres die Enden des Außenrohres nach dem Trennvorgang. Des Weiteren führt dieser Prozess dazu, dass das Innenrohr und die Stege endseitig in Richtung der Stirnfläche mit einer sich verjüngenden Wanddicke ausgebildet sind. Das Vorgesagte trifft im Wesentlichen nicht auf das Außenrohr zu, da zur Vereinfachung des Zerreißprozesses, insbesondere zur Herabsetzung der Zerreiß- und Haltekraft, für den Trennprozess das Außenrohr über einen wesentlichen Teil der Dicke, mindestens über 60 % der Dicke, eingeritzt, eingekerbt bzw. mit einem Einschnitt versehen wird. Vorteilhaft ist, dass beim Zerreißen kein Span entsteht.

Bei einer bevorzugten Ausführungsform eines Koaxialprofiles für einen inneren Wärmetauscher wird dieses einstückig durch Strangpressen hergestellt und besitzt einen konzentrischen Aufbau, nämlich ein Innenrohr, welches in konstantem Abstand von einem Außenrohr umgeben ist und die Stege sich in Radialrichtung erstrecken. Sie wirken damit aussteifend für das Koaxialrohr und gestatten es, den Zentralkanal besonders druckfest auszulegen.

Die Wanddicke des Innenrohres, des Außenrohres und der Stege liegt in einem Bereich von 0.5 mm bis 3 mm. Bei einer bevorzugten Ausführungsform ist die Wanddicke des Innenrohres, des Außenrohres und der Stege gleich groß. Die Wanddicke liegt in diesem Fall zwischen 0,8 mm bis 1,5 mm, vorzugsweise bei einem Wert von 1,0 mm. Diese vorgenannte Wanddicke bezieht sich ausschließlich auf den mittleren Bereich des Koaxialprofils und nicht auf die Enden. Wie bereits oben beschrieben, verjüngen sich die Enden der Stege und des Innenrohres beim Herstellungsprozess, nämlich beim Reißen. Der Bereich der sich verjüngenden Enden ist jedoch sehr gering. Er erstreckt sich maximal über eine Länge von 4 mm. Die Wanddicke des Außenrohres ist über die gesamte Länge des Koaxialprofils gleichbleibend, d.h. die Wanddicke der Enden des Außenrohres ist gegenüber der Wanddicke des Außenrohres im mittleren Bereich unverändert.

Die Anzahl der Außenkanäle kann je nach Anwendungsfall gewählt werden, bevorzugt sind 4 bis 32 Außenkanälen, besonders bevorzugt 12 bis 16 Außenkanäle, wobei vorzugsweise die Querschnittsfläche der jeweiligen Außenkanäle gleich groß ist, und die Summe der Querschnittsflächen der Außenkanäle größer ist, als die Querschnittsfläche des Zentralkanals. Bei einer bevorzugten Ausführungsform des Koaxialprofiles für einen inneren Wärmetauscher besitzt der Zentralkanal einen Innendurchmesser zwischen 3 bis 10 mm, vorzugsweise 5 bis 7 mm.

Der Zentralkanal weist vorteilhafterweise eine Zylinderform auf, was jedoch nicht die einzige mögliche Ausgestaltung darstellt. Bei einer Ausführungsform in der Erfindung sind ausgehend von der inneren Mantelfläche des Innenrohres radial nach innen in den Zentralkanal weisende Rippen vorgesehen. Diese Rippen bewirken, trotz der von ihnen verursachten Verengung des Zentralkanals und einem dadurch bewirkten Anstieg der Strömungsgeschwindigkeit, eine Verbesserung des Wärmeaustauschs zwischen dem Zentralkanal und den Außenkanälen.

Nachfolgend soll das erfindungsgemäße Verfahren zur Herstellung eines Koaxialprofiles beschrieben werden.

In einem ersten Schritt wird aus einem Barren aus Aluminium oder einer Aluminiumlegierung durch Strangpressen mindestens ein Strang eines Koaxialprofils erhalten. Der Strang des Koaxialprofils ist aus einem Innenrohr und einem das Innenrohr umgebende Außenrohr aufgebaut. Im Zwischenraum zwischen Innenrohr und Außenrohr sind mehrere, die äußere Mantelfläche des Innenrohres und die innere Mantelfläche des Außenrohres verbindende, sich radial erstreckende Stege angeordnet. Dieser aus der Strangpresse austretende Strang des Koaxialprofils wird im Pressenauslauf abgekühlt und jeder abgekühlte Strang auf eine Wickelrolle aufgewickelt. Von der Wickelrolle kann dann an einem anderen Ort und zu einer beliebigen Zeit der Strang des Koaxialprofiles abgewickelt werden.

In bekannter Weise kann beim Strangpressen ein einzelnes Koaxialprofil erzeugt werden. Es können jedoch auch mehrere Koaxialprofile gleichzeitig stranggepresst oder ein Verbundprofil aus mehreren Koaxialprofilen erzeugt werden, die nachfolgend in Einzelstränge aufgetrennt werden, so dass jeweils Einzelstränge auf den Wickelrollen aufgerollt werden.

Beim Abwickeln des Stranges wird dieser gerichtet, gegebenenfalls kalibriert und zu einer Trennvorrichtung transportiert, wo das Abtrennen einer gewünschten Länge des Koaxialprofils erfolgt. Hierzu wird der Strang des Koaxialprofils in der Trennvorrichtung angehalten und zwar nach Durchlauf einer vorgegebenen Länge des Stranges. Der Strang wird beidseitig von dem vorgegebenen Längenwert für die vorgesehene Trennstelle gefasst und gehalten, so dass zwischen den beiden Halterungen für den Strang die vorgesehene Trennung erfolgen kann. Hierzu wird die äußere Mantelfläche des Außenrohres des Koaxialprofiles umfangseitig ganz oder teilweise eingeritzt zur Erzeugung einer umfangseitigen Kerbe oder eines umfangseitigen Einschnittes. Dieser Einschnitt befindet sich genau am vorgegebenen Längenwert für die vorgesehene Trennung. Ein solches Einritzen kann auch außerhalb der Trennvorrichtung, nämlich in einer separaten Ritzvorrichtung erfolgen, insbesondere dann wenn der Prozess quasikontinuierlich erfolgen soll. Anschließend erfolgt ein Zerreißen des Stranges an der vorgesehenen Trennstelle, wozu der Strang in Längsrichtung des Koaxialprofils mit Hilfe der Haltevorrichtungen gezogen wird. Das Halten mittels der Haltevorrichtung kann formschlüssig und/oder kraftschlüssig ausgeführt werden. Bei diesem Zerreißprozess wird, ausgehend von der Kerbe bzw. dem Einschnitt, ein Riss in Querrichtung des Stranges erzeugt, der sich von außen nach innen fortsetzt und zur Abtrennung einer gewünschten Länge eines Koaxialrohres und zu einer nach außen gewölbten Trennfläche am Koaxialrohr führt.

Beim Abwickeln des Stranges des Koaxialprofils von der Wickelrolle wird der Strang vorzugsweise durch Rollenpaare geführt, wobei gleichzeitig ein Richten und gegebenenfalls ein Kalibrieren des Stranges und ein Weitertransport des Stranges erfolgen. Zum Transport des Stranges von der Wickelrolle zur Trennvorrichtung und weiter beispielsweise zur Konfektionierung wird bei einer weiteren Vorrichtung ein Transportband eingesetzt.

Bei einer Ausführungsform der Erfindung erfolgt das Halten des Stranges in der Ritz- und in der Trennvorrichtung mittels zweier Klemmbacken formschlüssig und/oder kraftschlüssig. Diese Klemmbacken klemmen den Strang zwischen sich ein. Die Klemmbacken können hydraulisch oder pneumatisch betrieben werden, vorzugsweise hydraulisch, wobei ein Spanndruck zwischen 60 und 120 bar einstellbar ist. Dieser Spanndruck richtet sich danach, welche Zerreißkraft beim nachfolgenden Trennprozess ausgeübt werden muss. Um diese Zerreißkraft möglichst gering zu halten, wird das Koaxialprofil vor dem Reißen umfangseitig mit dem Einschnitt versehen. Je tiefer dieser Einschnitt ist, desto geringer ist die Zerreißkraft und demzufolge die zu wählende Haltekraft für die Klemmbacken.

Die Ritztiefe beim umfangseitigen oder teilweise umfangseitigen Einritzen des Außenrohres beträgt vorzugsweise 60 bis 100 % der Wanddicke des Außenrohres. Bevorzugt wird eine große Ritztiefe, um die Zerreißkraft gering zu halten. Des Weiteren wird durch eine große Ritztiefe erreicht, dass das entstehende Koaxialprofil ein Außenrohr mit glatten Stirnflächen besitzt.

Bei einem erfindungsgemäßen Verfahren der Erfindung wird ein Orbitalschnitt mit einem Rollmesser erzeugt, d.h. mit einer sich drehenden Klinge. Bei einem solchen Einschnitt wird vorzugsweise die maximale Ritztiefe bei 100 % der Wanddicke des Außenrohres gewählt, da bei einer zu großen Ritztiefe die Gefahr besteht, dass Material in die Außenkammern gedrückt wird.

Bei einem weiteren Ausführungsbeispiel der Erfindung wird eine feststehende Klinge verwendet. Bei der Verwendung der feststehenden Klinge beträgt die maximale Ritztiefe 100 % der Wanddicke des Außenrohres. Bei der Verwendung der feststehenden Klinge besteht weniger das Problem, dass Material in die Außenkanäle gedrückt wird. Mehrere Versuche haben ergeben, dass die Verwendung der feststehenden Klinge zu einer Aufdickung an der äußeren Mantelfläche des Außenrohres führt. Sollte eine solche Aufdickung auftreten, kann diese durch geringfügige Nachbearbeitung. z.B. während des Einritzens, egalisiert werden, beispielsweise durch einen Drückprozess unter Verwendung eines Keramiksteines.

Wie bereits oben ausgeführt, ist die Haltekraft der Klemmbacken und ebenso die Zerreißkraft für die Trennung des Koaxialrohres abhängig von der Größe der Ritztiefe. Für Koaxialrohre aus Aluminium mit einer Wanddicke bis 3 mm und einer Ritztiefe zwischen 60 und 100 % der Wanddicke des Außenrohres wird eine Zerreißkraft von 5 bis 25 kN aufgewendet.

Der Vorteil der Erfindung besteht darin, dass ein einfaches Verfahren zur Herstellung eines Koaxialrohres zur Verfügung gestellt wird, das sich von den bekannten Herstellungsverfahren insbesondere durch den Trennschritt unterscheidet. Dieser Trennschritt führt dazu, dass ein Koaxialprofil erhalten wird, das keinen nachfolgenden Reinigungsprozessen unterzogen werden muss und in einfacher Weise mit Anschlussstücken versehen und verlötet werden kann.

Zur Herstellung eines solchen Koaxialrohres werden insbesondere 3xxx-, 5xxx- und 6xxx-Aluminiumlegierungen verwendet. Diese Aluminiumlegierungen sind korrosionsbeständig, so dass das Koaxialprofil für einen Wärmetauscher einsetzbar ist und diese Aluminiumlegierungen zeichnen sich dadurch aus, dass sie gut lötbar sind, was eine einfache Verbindung des Koaxialprofiles mit den Anschlussstücken ermöglicht. Bei der Verwendung von 3xxx- und 5xxx-Legierungen werden vorzugsweise Wanddicken für die Innenrohre, Außenrohre und Stege im Bereich von 0,5 bis 3 mm gewählt. Bei der Verwendung von 6xxx-Legierungen liegen diese Wanddicken bei 0,5 bis 1,5 mm.

Die Erfindung wird nachfolgend an einem Ausführungsbeispiel anhand der Zeichnung beschrieben. Es zeigen:
- Fig. 1: die Vorderansicht eines erfindungsgemäßen Koaxialprofils;
- Fig. 2: einen Längsschnitt durch das Koaxialprofil gemäß Fig. 1 und
- Fig. 3: eine Prinzipskizze für ein erfindungsgemäßes Verfahren.

Das erfindungsgemäße Koaxialprofil 10 besitzt ein Innenrohr 11, das einen Zentralkanal 12 bildet. Durch diesen Zentralkanal 12 wird bei Verwendung des Koaxialprofils 10 im inneren Wärmetauscher das Hochdruckmedium geleitet. Der Betriebsdruck liegt bei etwa 340 bar.

Das Innenrohr 11 ist von einem Außenrohr 14 umgeben. Von der äußeren Mantelfläche 13 des Innenrohres zur inneren Mantelfläche 16 des Außenrohres 14 verlaufen Stege 19, die sich radial erstrecken und Außenkanäle 18 bilden. Durch die Außenkanäle 18 wird bei Verwendung des Koaxialprofils 10 im inneren Wärmetauscher das Niederdruckmedium geleitet. Der Betriebsdruck liegt bei etwa 260 bar. In diesem Fall besitzt das Koaxialprofil 10 zwölf Außenkanäle 18, die alle den gleichen Querschnitt aufweisen. Dieser Querschnitt ist über die Länge des Koaxialprofils 10 unverändert. Koaxialprofile 10 mit einem solchen Querschnitt sind an sich bekannt.

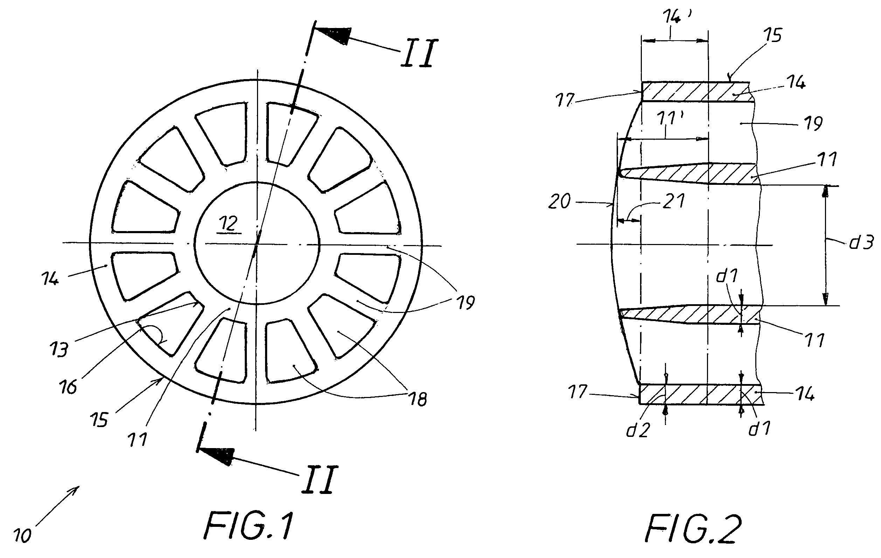

Neu und erfindungsgemäß ist die Ausgestaltung der Enden des Koaxialprofiles 10. Diese Enden sind aus der Fig. 2 zu ersehen. Das Außenrohr 14 besitzt ein Ende 14', wobei die Wanddicke d1 des Außenrohres 14 im mittleren Bereich und die Wanddicke d2 am Ende 14' des Außenrohres 14 unverändert ist. Die Stirnseite 17 des Außenrohres verläuft senkrecht zur Längsausrichtung des Koaxialprofiles 10. Diese Stirnfläche 17 ist eine glatte Fläche. Dies ermöglicht eine einfache Verbindung mit dem Anschlussstück, beispielsweise über eine Lötverbindung. Im Gegensatz zu der Ausbildung der Enden 14' des Außenrohres 14 sind die Enden 11' des Innenrohres 11 verändert. Die Enden 11' des Innenrohres 11 überragen die Enden 14' des Außenrohres 14 und die Wanddicke der Enden 11' des Innenrohres 11 verjüngen sich zum stirnseitigen Ende. In gleicher Weise verjüngen sich die Stege 19 zum stirnseitigen Ende hin und überragen die Enden 14' des Außenrohres 14. Die Enden 11' des Innenrohres 11 zeigen dabei einen maximalen Überstand 21. Der Überstand der Enden der Stege vergrößert sich mit dem Abstand vom Außenrohr 14. Auf diese Weise ergibt sich eine Stirnfläche 20 des Koaxialprofils 10, die nach außen gewölbt ist. Eine solche gewölbte Stirnfläche 20 kommt durch den Abtrennvorgang des Koaxialprofils 10 von einem Endlosstrang bei der Herstellung zustande. Das Abtrennen erfolgt anders als beim Stand der Technik, wo ein Trennschnitt vorgenommen wird, in diesem Fall über einen Reißvorgang. Daher besitzen die Koaxialprofile 10 keine senkrecht zur Längsausrichtung verlaufende Stirnfläche 20. Beim Trennvorgang wird der Strang 10' des Koaxialprofils beidseitig einer vorgesehenen Trennstelle gefasst und mit einer ausreichend hohen Haltekraft festgehalten. Dann wird das Koaxialprofil 10' umfangseitig eingeritzt, so dass ein umfangseitiger Einschnitt ausgehend von der Mantelfläche 15 des Außenrohres 14 entsteht. Der Einschnitt wird über mindestens 65 % der Wanddicke d1 des Außenrohres 14 vorgenommen. In diesem Beispiel wurde der Einschnitt über 100 % der Wanddicke d1 vorgenommen. Die Wanddicke d1 des Außenrohres 14 im mittleren Bereich und die Wanddicke d2 der Enden 14' des Außenrohres 14 sind in diesem Beispiel 1 mm. Der Einschnitt beim Trennvorgang erfolgte über 0,90 mm. Durch diesen Einschnitt wird die glatte Stirnfläche 17 des Außenrohres 14 nach dem Trennvorgang erreicht. Ausgehend vom erzeugten Einschnitt beim Ritzvorgang schreitet der Riss während des Zerreißens fort. Hierzu wird mit einer ausreichend hohen Zerreißkraft das Koaxialprofil 10 entweder beidseitig von der Trennstelle in Längsrichtung weggezogen oder der Strang des Koaxialprofiles an einer Seite von der Trennstelle festgehalten und an der anderen Seite der Trennstelle in Längsrichtung vom Strang weggezogen, bis zuletzt das Innenrohr 11 vom Strang 10' abgezogen vollständig abgezogen und eine Trennung erzielt ist.

Da die Bereiche, die am weitesten vom Außenrohr 14 entfernt sind, nämlich das Innenrohr 11, beim Ziehvorgang am längsten gezogen werden, ereichen die Enden 11' des Innenrohres 11 die größte Längenausdehnung, den maximalen Überstand 21. Der entstandene Überstand 21 der Enden 11' des Innenrohres 11 und der Enden der Stege kann bei den Anschlussstücken berücksichtigt werden, zumal der maximale Überstand 21 abhängig von der verwendeten Aluminiumlegierung nicht sehr groß ist. Im Ausführungsbeispiel wurde eine 3003-Aluminiumlegierung verwendet. Die Wanddicke d1 des Innenrohres 11, des Außenrohres 14 und der Stege 19 ist gleich und beträgt 1,0 mm. Der maximale Überstand 21 beträgt 0,5 mm. Auch der Bereich, der sich durch den Trennvorgang verändert hat, nämlich die verjüngenden Enden 11' des Innenrohres 11 bzw. die verjüngenden Enden der Stege 19 ist nicht sehr groß. Die Länge der verjüngenden Enden 11' des Innenrohres 11 und der Stege erstreckt sich maximal auf 5 mm.

Durch die geringfügige Veränderung der Wanddicke des Innenrohres 11 bzw. der Stege 19 an deren Enden wird die Querschnittsfläche der Außenkanäle 18 bzw. die Querschnittsfläche des Zentralkanales 12 nicht so wesentlich verändert, dass es im Bereich der Anschlussstücke zu wesentlichen Druckverlusten kommt, zumal bei den meisten Anschlussstücken eine Zuleitung endseitig in den Zentralkanal 12 eingeschoben wird, die an den Innendurchmesser d3 des Zentralkanals angepasst ist. Der Innendurchmesser d3 ist in diesem Fall 6 mm, im Bereich der Stirnfläche ist er auf 7mm vergrößert. Diese Vergrößerung erleichtert in vorteilhafter Weise das Einschieben einer Zuleitung.

Bei Verwendung des Koaxialprofiles 10 im inneren Wärmetauscher werden beidseitig Anschlusstücke vorgesehen, die es ermöglichen kühles Hochdruckmedium von einer Seite in den Zentralkanal 12 einzuleiten und am anderen Ende wieder abzuleiten und warmes gasförmiges Medium an einer Seite aus den Außenkanälen 18 aufzunehmen und an der anderen Seite entsprechend verteilt auf die Außenkanäle einzuspeisen. Die Querschnittsflächen der Außenkanäle 18 sind alle gleich groß, so dass ein gleichmäßiger Wärmeaustausch zwischen den Außenkanälen 18 und dem Zentralkanal 12 stattfindet. Dies wird unterstützt durch die konzentrische Anordnung der Außenkanäle 18 zum Zentralkanal 12 und die sich radial erstreckenden Stege 19. Diese Stege 19 unterstützen zudem die Stabilität des Koaxialprofils 10.

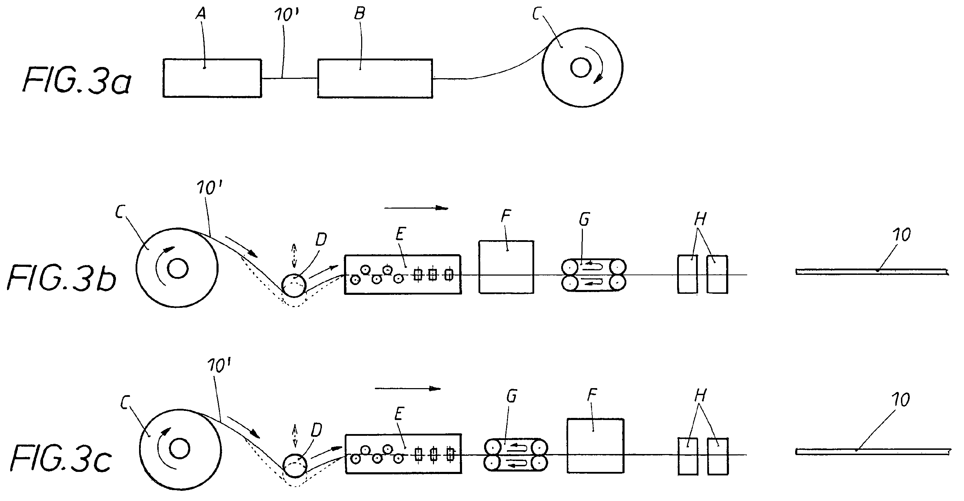

Das erfindungsgemäße Verfahren zur Herstellung eines Koaxialprofils 10 ist beispielsweise in der Fig. 3 in einer Prinzipskizze dargestellt und soll nachfolgend näher beschrieben werden.

In einem ersten Schritt wird ein Barren aus einer 3003-Aluminiumlegierung in eine Strangpresse A eingeführt und durch Strangpressen ein Strang 10' eines Koaxialprofils erhalten. Der Strang 10' des Koaxialprofils besitzt den in Fig. 1 gezeigten Querschnitt. Dieser aus der Strangpresse A austretende Strang 10' des Koaxialprofils wird im Pressenauslauf abgekühlt, d.h. durchläuft eine Kühlstrecke B. Der abgekühlte Strang 10' wird dann am Ende der Kühlstrecke B auf eine Wickelrolle C aufgewickelt. Dies ist in Fig.3a gezeigt.

Von der Wickelrolle C kann dann an einem anderen Ort und zu einer beliebigen Zeit der Strang 10'des Koaxialprofils wieder abgecoilt werden. Siehe dazu Fig.3b. Beim Abwickeln des Stranges 10' von der Wickelrolle C wird dieser gerichtet. Dazu durchläuft er mehrere versetzt angeordnete Rollen, die in Fig. 3 als Richtvorrichtung E zusammengefasst sind. Der gerichtete Strang 10' wird mittels eines Förderbandes G transportiert und durchläuft nach dem Richten E eine Ritzvorrichtung F und eine Trennvorrichtung H. Das Förderband kann wie in Fig.3b gezeigt, nach der Ritzvorrichtung F oder wie in Fig. 3c gezeigt, nach der Richtvorrichtung E angeordnet werden.

In der Ritzvorrichtung F wird nach Durchlauf einer vorgegebenen Länge des Stranges 10' des Koaxialprofils an der vorgesehenen Trennstelle umfangsseitig ein Einschnitt in die Mantelfläche 15 des Außenrohres 14 erzeugt. Bei dem vorliegenden Ausführungsbeispiel gemäß Fig. 1 mit einer Wanddicke von d1 = 1 mm wird ein 0,9 mm tiefer Einschnitt vorgenommen und der Strang 10' dann weiter zu der Trennvorrichtung H transportiert, wo das Abtrennen einer gewünschten Länge des Koaxialprofils 10 erfolgt. Hierzu wird der Strang 10' des Koaxialprofils in der Trennvorrichtung H angehalten, sobald die vorgesehenen Trennstelle ihre vorgesehene Lage in der Trennvorrichtung H erreicht hat. Der Strang 10' wird beidseitig der vorgesehene Trennstelle von oben und unten mittels einer Klemmbacke gefasst, so dass die beiden Klemmbacken den Strang umfangseitig in sich aufnehmen und fest halten. Dann erfolgt die Trennung durch einen Ziehvorgang, wozu der Strang 10' in Längsrichtung des Koaxialprofils mit Hilfe der Klemmbacken gezogen wird. Bei diesem Zerreißprozess wird, ausgehend von dem umfangsseitigen Einschnitt, ein Riss in Querrichtung des Stranges erzeugt, der sich von außen nach innen fortsetzt und zur Abtrennung einer gewünschten Länge eines Koaxialprofils10 führt. Für das Koaxialprofil 10 aus der 3003-Aluminiumlegierung mit einer Wanddicke d1 von 1 mm und der Ritztiefe von 90 % der Wanddicke d1 des Außenrohres 14, also 0,9 mm wurde eine Zerreißkraft von 6,39 bis 6,55 kN benötigt.

Um beidseitig von der Trennstelle wegziehen zu können, wird bevorzugt ein Materialspeicher D in Form einer Tänzervorrichtung eingesetzt. Nach dem Abtrennen des Koaxialprofils 10 wird dieses weitertransportiert, beispielsweise zur Konfektionierung und/oder Verpackung. Ein Reinigungsschritt ist nicht notwendig. Eventuell verwendete Schmierfette oder Schmieröle für den Einschnitt gelangen beim Reißvorgang nicht in die Außenkanäle.

Der Vorteil der Erfindung besteht darin, dass ein einfaches Verfahren zur Herstellung eines Koaxialrohres zur Verfügung gestellt wird, das sich von den bekannten Herstellungsverfahren insbesondere durch den Trennschritt unterscheidet. Dieser Trennschritt führt dazu, dass ein Koaxialprofil erhalten wird, das gratfrei und frei von Verunreinigungen ist und in einfacher Weise mit Anschlussstücken versehen und verlötet werden kann.

Die Erfindung ist nicht auf das gezeigte Ausführungsbeispiel beschränkt. So kann ein Koaxialprofil 10 weniger oder mehr Außenkanäle 18 besitzen. Eine von der konzentrischen Form abgewandelte Querschnittsform haben, oder für spezielle Anwendungszwecke können auch die Querschnittsflächen der Außenkanäle unterschiedlich gestaltet sein. Des Weiteren ist bekannt, zur Unterstützung des Wärmeaustausches von der inneren Mantelfläche des Innenrohres radial nach innen in den Zentralkanal 12 weisende Rippen vorzusehen. Im Ausführungsbeispiel gemäß Fig. 1 und 2 ist der Zentralkanal 12 zylindrisch und weist keine Rippen auf, um die Strömungsgeschwindigkeit des Hochdruckmediums nicht zu verringern.

### Bezugszeichenliste:

- 10: Koaxialprofil
- 10': Koaxialprofilstrang
- 11: Innenrohr
- 11': Ende von 11
- 12: Zentralkanal
- 13: äußere Mantelfläche von 11
- 14: Außenrohr
- 14': Ende von 14
- 15: äußere Mantelfläche von 14
- 16: innere Mantelfläche von 14
- 17: Stirnfläche von 14
- 18: Außenkanal
- 19: Steg
- 20: Stirnfläche von 10
- 21: maximaler Überstand

- A: Strangpresse
- B: Kühlstrecke
- C: Wickelvorrichtung
- D: Materialspeicher
- E: Richtvorrichtung
- F: Ritzvorrichtung
- G: Förderband
- H: Trennvorrichtung

- d1: Wanddicke von 11,14,19
- d2: Wanddicke von 14'
- d3: Durchmesser von 12

## Patentansprüche

1. Verfahren zum Herstellen eines Koaxialprofils (10) aus Aluminium oder einer Aluminiumlegierung mit den folgenden Verfahrensschritten:
- Strangpressen mindestens eines Stranges eines Koaxialprofils (10) in einer Strangpresse (A), wobei jeder Strang jeweils aufgebaut ist aus einem Innenrohr (11), welches von einem Außenrohr (14) umgeben ist, wobei im Zwischenraum zwischen dem Außenrohr (14) und dem Innenrohr (11) mehrere die äußere Mantelfläche (13) des Innenrohr (11) und die innere Mantelfläche (16) des Außenrohres (14) verbindende, sich radial erstreckende Stege (19) angeordnet sind,
- Abkühlen des aus der Strangpresse austretenden Stranges des Koaxialprofils (10) im Pressenauslauf (B),
- Aufwickeln des abgekühlten Stranges des Koaxialprofils (10) auf eine Wickelrolle (C),
- Abwickeln des Stranges des Koaxialprofils (10) von der Wickelrolle (C) sowie Richten des Stranges des Koaxialprofils (10) und Weitertransport des Stranges zu einer Trennvorrichtung (D),
- Anhalten des transportierten Stranges des Koaxialprofils (10) nach Durchlauf einer vorgegebenen Länge des Stranges in einer Trennvorrichtung (D) und Fassen sowie Festhalten des Stranges vor und hinter dem vorgegebenen Längenwert für die vorgesehenen Trennung,
- anschließendes umfangseitiges Einritzen der äußeren Mantelfläche (15) des Außenrohres (14) des Koaxialprofils (10) zur Erzeugung eines umfangsseitigen Einschnittes beim vorgegebenen Längenwert für die vorgesehene Trennung,
- Ziehen in Längsrichtung des Stranges, wobei ausgehend von der umfangseitigen Kerbe ein Riss in Querrichtung des Stranges erzeugt wird, der zur Abtrennung einer gewünschten Länge eines Koaxialrohres und zu einer nach außen gewölbt Trennfläche führt.

2. Verfahren nach Anspruch 1, **dadurch gekennzeichnet, dass** der aus der Strangpresse (A) austretende Strang entweder ein Verbundprofil aus mehreren Koaxialprofilen (10) ist, wobei vor dem Aufwickeln das Verbundprofil in einzelne Stränge aufgetrennt wird, so dass jeder aufgewickelte Strang ein Koaxialprofil (10) enthält, oder mehrere gleiche Stränge eines Koaxialprofils beim Strangpressen erzeugt werden.

3. Verfahren nach Anspruch 1, **dadurch gekennzeichnet, dass** nach dem Abwickeln des Stranges des Koaxialprofils dieser Strang zum Richten durch ein Rollenpaar transportiert wird, wobei der Transport mittels eines Transportbandes erfolgt.

4. Verfahren nach Anspruch 1, **dadurch gekennzeichnet, dass** das Fassen und Festhalten des Stranges in der Trennvorrichtung (D) durch jeweils zwei Klemmbacken erfolgt, vorzugsweise durch hydraulisch betriebene Klemmbacken mit einem Spanndruck von 60 bis 120 bar.

5. Verfahren nach Anspruch 1, **dadurch gekennzeichnet, dass** das Einritzen mit einer feststehenden Klinge oder mit einer sich drehendem Klinge, vorzugsweise mit einem Rollmesser, erfolgt, wobei die Ritztiefe 60% bis 95 % der Wanddicke (d1) des Außenrohres (14) entspricht.

6. Verfahren nach Anspruch 5, **dadurch gekennzeichnet, dass** zum Abtrennen eines Koaxialprofils (10) mit Wanddicken (d1) kleiner 2 mm und Ritztiefen von mindestens 60% der Wanddicke (d1) des Außenrohres (14) beim Ziehen eine Zerreißkraft von 5 kN bis 25 kN aufgewendet wird.

7. Verfahren nach einem der Ansprüche 1 bis 6, **dadurch gekennzeichnet, dass** eine lötbare, korrosionsbeständige Aluminiumlegierung eingesetzt wird, vorzugsweise eine 3xxx-Legierung, eine 5xxx-Legierung oder eine 6xxx-Legierung.

8. Koaxialprofil, vorzugsweise aus Aluminium oder einer Aluminiumlegierung, für die getrennte Durchleitung zweier Medien,
mit einem Innenrohr (11), welches einen Zentralkanal (12) bildet,
mit einem das Innenrohr (11) umgebenden Außenrohr (14), wobei im Zwischenraum zwischen dem Außenrohr (14) und dem Innenrohr (11) mehrere die äußere Mantelfläche (13) des Innenrohres (11) und die innere Mantelfläche (16) des Außenrohres (14) verbindende, sich radial erstreckende Stege (19) angeordnet sind, so dass sich mehrere um den Zentralkanal (12) angeordnete Außenkanäle (18) ergeben,
wobei an den jeweiligen Enden des Koaxialprofils (10) die Stirnfläche (17) des Außenrohres (14) ausgehend von der äußeren Mantelfläche (15) über mindestens 60% der Wanddicke des Außenrohres (14) senkrecht zur Längsrichtung des Koaxialprofils (10) verläuft und die Enden (11') des Innenrohres (11) die Enden (14') des Außenrohres (14) überragen,
**dadurch gekennzeichnet, dass** es durch ein Verfahren nach einem der Ansprüche 1 bis 7 hergestellt wurde,
so dass der Bereich der endseitigen Stirnfläche (20) des Koaxialprofils (10), der durch die Stege (19) und das Innenrohr (11) gebildet ist, konvex nach außen gewölbt ist und wobei das Innenrohres (11) und die Stege (19) endseitig in Richtung der Stirnfläche (20) mit einer sich verjüngenden Wanddicke ausgebildet sind.

9. Koaxialprofil nach Anspruch 8, **dadurch gekennzeichnet, dass** das Koaxialprofil (10) einstückig stranggepresst ist und vorzugsweise einen konzentrischen Aufbau besitzt, nämlich ein Innenrohr (11) umfasst, welches in konstantem Abstand von einem Außenrohr (14) umgeben ist.

10. Koaxialprofil nach Anspruch 8 oder 9, **dadurch gekennzeichnet, dass** die Enden (14') des Außenrohres (14) ausgehend von der äußeren Mantelfläche (15) über 60% bis 95% der Wanddicke des Außenrohres (14) eine senkrecht zur Längsrichtung verlaufende glatte Stirnfläche (17) besitzen und dass die endseitige gewölbte Stirnfläche (20) des Koaxialprofils (10) einen maximalen Überstand (21) gegenüber den endseitigen Stirnflächen (17) des Außenrohres (14) von 0.5 mm bis 3 mm besitzt.

11. Koaxialprofil nach einem der Ansprüche 8 bis 10, **dadurch gekennzeichnet, dass** im mittleren Bereich des Koaxialprofils (10) die Wanddicke (d1) des Innenrohres (11), des Außenrohres (14) und der Stege (19) gleich ist und eine Wanddicke (d1) von 0.6 bis 1.5 mm, vorzugsweise 1.0 bis 1.2 mm, beträgt und dass die Wanddicke (d2) des Außenrohres (14) im Bereich der Enden (14') und die Wanddicke (d1) des Außenrohres (14) im mittleren Bereich gleich ist.

12. Koaxialprofil nach einem der Ansprüche 8 bis 11, **dadurch gekennzeichnet, dass** 4 bis 32 Außenkanäle (18) den Zentralkanal (12) umgeben, vorzugsweise 12 bis 16 Außenkanäle (18) und dass alle Außenkanäle (18) die gleiche Querschnittsfläche aufweisen.

13. Koaxialprofil gemäß den Ansprüchen 8 bis 12, **dadurch gekennzeichnet, dass** der Innendurchmesser (d3) des Zentralkanals (12) 3mm bis 10 mm, vorzugsweise 6 mm, beträgt.

14. Koaxialprofil gemäß den Ansprüchen 8 bis 13, **dadurch gekennzeichnet, dass** ausgehend von der inneren Mantelfläche des Innenrohres (11) radial nach innen in den Zentralkanal (12) weisende Rippen vorgesehen sind.

15. Verwendung eines Koaxialprofils gemäß einem der Ansprüche 8 bis 14 für einen innerer Wärmetauscher einer Klimaanlage.

## Claims

1. Procedure to establish a coaxial profile (10) made from aluminium or an aluminium alloy using the following procedural steps:
- Extrusion pressing a minimum of one strand of a coaxial profile (10) in an extrusion press (A), whereby, each strand is constructed from an internal tube (11), which is surrounded by an external tube (14), whereby, in the space between the external tube (14) and internal tube (11), multiple radially spreading webs (19) are arranged that connect the outer shell surface (13) of the internal tube (11) and the inner shell surface (16) of the external tube (14),
- Cooling down the strand of coaxial profile (10) coming from the extrusion press in the press outlet (B),
- winding the cooled strand of coaxial profile (10) on a winding roller (C),
- Unwinding the strand of coaxial profile (10) from the winding roller (C), as well as aligning the strand of coaxial profile (10) and further transportation of the strand to a separating device (D),
- Stopping the transported strand of coaxial profile (10) after passage of a specified length of the strand in a separating device (D) and grasping, as well as firmly holding the strand before and after the specified value of the length for the intended separation,
- subsequent scoring of the peripheral side of the outer shell surface (15) of the external tube (14) of the coaxial profile (10) to generate a score on the peripheral side for the specified value of the length for the intended separation,
- pulling in the longitudinal direction of the strand, whereby, emanating from the notch on the peripheral side, a fissure is generated in the transverse direction of the strand, which results in separating the length of a coaxial tube required and to a convex separation surface.

2. Procedure in accordance with claim 1, **characterized in that** the strand coming from the extrusion press (A) is either a barrier profile of multiple coaxial profiles (10), whereby, before winding, the barrier profile is separated into individual strands, so that for each strand wound up contains a coaxial profile (10), or multiple similar strands of a coaxial profile are generated during extrusion pressing.

3. Procedure in accordance with claim 1, **characterized in that**, after winding up the strands of the coaxial profile, this strand is transported by a pair of rollers for aligning, whereby, transportation is carried out using a conveyor belt.

4. Procedure in accordance with claim 1, **characterized in that** grasping and firmly holding the strand in the separating device (D) is carried out by two clamping jaws, preferably using hydraulically-operated clamping jaws with a clamping pressure of 60 to 120 bar.

5. Procedure in accordance with claim 1, **characterized in that** scoring is carried out using a stationary blade or with a rotating blade, preferably a rolling knife, whereby, the depth of the score equates to 60% to 95 % of the thickness of the wall (d1) of the external tube (14).

6. Procedure in accordance with claim 5, **characterized in that**, for separating a coaxial profile (10) with wall thicknesses (d1) of less than 2 mm a score depths of a minimum of 60% of the wall thickness (d1) of the external tube (14) when pulling, a breaking tensile strength of 5 kN to 25 kN is applied.

7. Procedure in accordance with one of the claims 1 to 6, **characterized in that** a corrosion-resistant aluminium alloy is used that can be soldered, preferably a 3xxx alloy, a 5xxx alloy or a 6xxx alloy.

8. Coaxial profile, preferably made from aluminium or an aluminium alloy for the separate conveyance of two media,
with an internal tube (11), that forms a central channel (12),
with one of the external tubes (14) surrounding the internal tube (11), whereby, in the space between the external tube (14) and internal tube (11), multiple radially spreading webs (19) are arranged that connect the outer shell surface (13) of the internal tube (11) and the inner shell surface (16) of the external tube (14), so that multiple external channels (18) are arranged around the central channel (12).
whereby, at the respective ends of the coaxial profile (10), the front face (17) of the external tube (14), emanating from the outer shell surface (15), runs vertical to the longitudinal direction of the coaxial profile (10) across a minimum of 60% of the wall thickness of the external tube (14) and the ends (11') of the internal tube (11) overlap the ends (14') of the external tube (14),
**characterized in that** it has been established by a procedure in accordance with one of the claims 1 to 7,
so that the area of the front surface of the end (20) of the coaxial profile (10), formed by the webs (19) and internal tube (11), is convex-shaped and, whereby, the internal tube (11) and the webs (19) are formed at the end in the direction of the front surface (20) with tapering wall thickness.

9. Coaxial profile in accordance with claim 8, **characterized in that** the coaxial profile (10) is extrusion pressed in one piece and, preferably has a concentric construction, namely, comprising of an internal tube (11) that is surrounded by an external tube (14) at a constant distance.

10. Coaxial profile in accordance with claim 8 or 9, **characterized in that** the ends (14') of the external tube (14), emanating from the outer shell surface (15), has a smooth front surface (17) across 60% to 95% of the wall thickness of the external tube (14), running vertical to the longitudinal direction and that the arched front surface (20) of the coaxial profile (10) has a maximum protrusion (21) of 0.5 mm to 3 mm in comparison to the end front surfaces (17) of the external tube (14).

11. Coaxial profile in accordance with one of claims 8 to 10, **characterized in that** in the centre area of the coaxial profile (10), the wall thickness (d1) of the internal tube (11), the external tube (14) and the webs (19) is equal and the wall thickness (d1) is from 0.6 to 1.5 mm, preferably 1.0 to 1.2 mm and that the wall thickness (d2) of the external tubs (14) in the area of the ends (14') and the wall thickness (d1) of the external tube (14) in the centre area is equal.

12. Coaxial profile in accordance with one of claims 8 to 11, **characterized in that** 4 to 32 external channels (18) surround the central channel (12), preferably 12 to 16 external channels (18) and that all external channels (18) feature the same cross-section area.

13. Coaxial profile in accordance with the claims 8 to 12, **characterized in that** the internal diameter (d3) of the central channel (12) is 3 mm to 10 mm, preferably 6 mm.

14. Coaxial profile in accordance with the claims 8 to 13, **characterized in that** ribs are provided radially inwards in the central channel (12), emanating from the inner shell surface of the internal tube (11).

15. Using a coaxial profile in accordance with the claims 8 to 14 for an internal heat exchanger of an air-conditioning system.

## Revendications

1. Procédé pour fabriquer un profilé coaxial (10) en aluminium ou en un alliage d'aluminium en passant par les étapes de procédé suivantes :
- Extrusion d'au moins un tronçon d'un profilé coaxial (10) dans une presse à extruder (A), sachant que chaque tronçon se compose respectivement d'un tube intérieur (11) entouré d'un tube extérieur (14), sachant que dans l'espace intermédiaire entre le tube extérieur (14) et le tube intérieur (11) sont disposées plusieurs nervures (19) s'étendant radialement qui relient la surface enveloppante externe (13) du tube intérieur (11) et la surface enveloppante interne (16) du tube extérieur (14),
- Refroidissement en sortie de presse (B) du tronçon du profilé coaxial (10) en train de quitter la presse d'extrusion,
- Enroulement du tronçon refroidi du profilé coaxial (10) sur un rouleau de bobinage (C),
- Déroulement du tronçon du profilé coaxial (10) du rouleau de bobinage (C) ainsi que dressage du tronçon du profilé coaxial (10) et poursuite du transport du tronçon vers un dispositif de sectionnement (D),
- Immobilisation du tronçon transporté du profilé coaxial (10) après qu'une longueur spécifiée du tronçon a traversé un dispositif de sectionnement (D), puis saisie et retenue du tronçon en amont et en aval de la valeur de longueur spécifiée pour réaliser le sectionnement prévu,
- Ensuite, réalisation d'une rainure circonférentielle sur la surface enveloppante (15) du tube extérieur (14) du profilé coaxial (10) pour générer une incision circonférentielle, sur l'emplacement de la valeur de longueur spécifiée, en vue du sectionnement prévu,
- Traction en direction longitudinale du tronçon, sachant qu'en partant de l'entaille circonférentielle une déchirure est générée dans le sens transversal du tronçon, laquelle provoque la séparation d'une longueur souhaitée du tube coaxiale et la formation d'une surface de séparation incurvée vers l'extérieur.

2. Procédé selon la revendication 1, **caractérisé en ce que** le tronçon sortant de la presse à extruder (A) soit est un profilé composite comprenant plusieurs profilés coaxiaux (10), sachant qu'avant l'enroulement le profilé composite est séparé en tronçons individuels afin que chaque tronçon enroulé contienne un profilé coaxial (10), soit que plusieurs tronçons identiques d'un profilé coaxial sont produits pendant l'extrusion à la presse.

3. Procédé selon la revendication 1, **caractérisé en ce qu'**après le déroulement du tronçon du profilé coaxial, ce tronçon est transporté vers le dressage par une paire de rouleaux, sachant que le transport est assuré par un tapis transporteur.

4. Procédé selon la revendication 1, **caractérisé en ce que** la saisie et la retenue du tronçon dans le dispositif de sectionnement (D) sont effectuées par respectivement deux mâchoires de bridage, de préférence par des mâchoires de bridage à commande hydraulique sous une pression de serrage comprise entre 60 et 120 bars.

5. Procédé selon la revendication 1, **caractérisé en ce que** la rainure est effectuée par une lame immobile ou par une lame en rotation, de préférence par une molette, sachant que la profondeur de la rainure représente 60 à 95 % de l'épaisseur de la paroi (d1) du tube extérieur (14).

6. Procédé selon la revendication 5, **caractérisé en ce que** pour sectionner par traction un profilé coaxial (10) présentant des épaisseurs de paroi (d1) inférieures à 2 mm et des profondeurs de rainure représentant au moins 60 % de l'épaisseur de paroi (d1) du tube extérieur (14), on applique une force de déchirure comprise entre 5 et 25 kN.

7. Procédé selon l'une des revendications 1 à 6, **caractérisé en ce qu'**est utilisée un alliage d'aluminium brasable résistant à la corrosion, de préférence un alliage 3xxx, un alliage 5xxx ou un alliage 6xxx.

8. Profilé coaxial de préférence en aluminium ou en un alliage d'aluminium, destiné au passage séparé de deux fluides,
avec un tube intérieur (11) formant un conduit central (12),
avec un tube extérieur (14) entourant le tube intérieur (11), sachant que dans la cavité intermédiaire entre le tube extérieur (14) et le tube intérieur (11) sont agencées plusieurs nervures (19) s'étendant de façon radiale et reliant la surface enveloppante externe (13) tube intérieur (11) et la surface enveloppante interne (16) du tube extérieur (14), de sorte qu'en résultent plusieurs conduits extérieurs (18) agencés autour du conduit central (12),
sachant que contre les extrémités respectives du profilé coaxial (10), la surface frontale (17) du tube extérieur (14) s'étend, en partant de la surface enveloppante externe (15), sur au moins 60 % de l'épaisseur de la paroi du tube extérieur (14) perpendiculairement à la direction longitudinale du profilé coaxial (10), et que les extrémités (11') du tube intérieur (11) dépassent les extrémités (14') du tube extérieur (14),
**caractérisé en ce qu'**il a été fabriqué par un procédé selon l'une des revendications 1 à 7,
de sorte que la zone de la surface frontale (20) terminale du profilé coaxial (10), zone qui est formée par les nervures (19) et le tube intérieur (11), présente une convexité vers l'extérieur et sachant que le tube intérieur (11) et les nervures (19) sont configurés, du côté terminal, en direction de la surface frontale (20), avec une épaisseur de paroi allant en s'amenuisant.

9. Profilé coaxial selon la revendication 8, **caractérisé en ce que** le profilé coaxial (10) est extrudé monobloc à la presse et présente de préférence une structure concentrique, à savoir qu'il comprend un tube intérieur (11) entouré, à une distance constante, d'un tube extérieur (14).

10. Profilé coaxial selon la revendication 8 ou 9, **caractérisé en ce que** les extrémités (14') du tube extérieur (14) présentent, en partant de la surface enveloppante externe (15) et sur 60 à 95 % de l'épaisseur de paroi du tube extérieur (14), une surface frontale (17) lisse perpendiculaire au sens longitudinal, et **en ce que** la surface frontale (20) terminale incurvée du profilé coaxial (10) présente une saillie (21) maximale de 0,5 à 3 mm en face des surfaces frontales (17) terminales du tube extérieur (14).

11. Profilé coaxial selon l'une des revendications 8 à 10, **caractérisé en ce que** dans la zone médiane du profilé coaxial (10) l'épaisseur de paroi (d1) du tube intérieur (11), du tube extérieur (14) et des nervures (19) est identique et qu'une épaisseur de paroi (d1) est comprise entre 0,6 et 1,5 mm, de préférence entre 1,0 et 1,2 mm, et **en ce que** l'épaisseur de paroi (d2) du tube extérieur (14) dans la zone des extrémités (14') et que l'épaisseur de paroi (d1) du tube extérieur (14) dans la zone médiane est identique

12. Profilé coaxial selon l'une des revendications 8 à 11, **caractérisé en ce que** 4 à 32 conduits extérieurs (18) entourent le conduit central (12), de préférence 12 à 16 conduits extérieurs (18), et **en ce que** les conduits extérieurs (18) présentent tous la même section.

13. Profilé coaxial selon les revendications 8 à 12, **caractérisé en ce que** le diamètre intérieur (d3) du conduit central (12) est compris entre 3 et 10 mm, qu'il fait de préférence 6 mm.

14. Profilé coaxial selon les revendications 8 à 13, **caractérisé en ce qu'**en partant radialement de la surface enveloppante interne du tube intérieur (11), des rainures radiales pointant vers l'intérieur dans le conduit central (12) sont prévues.

15. Utilisation d'un profilé coaxial selon l'une des revendications 8 à 14 pour l'échangeur thermique interne d'une climatisation.
